Europäisches Patentamt

European Patent Office

Office européen des brevets

(11) Numéro de publication : **0 359 660 B1**

(12) **FASCICULE DE BREVET EUROPEEN**

(19)

(45) Date de publication du fascicule du brevet :
**17.06.92 Bulletin 92/25**

(51) Int. Cl.⁵ : **G01B 11/12,** G01N 21/88

(21) Numéro de dépôt : **89402495.9**

(22) Date de dépôt : **13.09.89**

(54) Contrôle optique de microperçages d'aubes de turbine.

(30) Priorité : **15.09.88 FR 8812008**

(43) Date de publication de la demande :
**21.03.90 Bulletin 90/12**

(45) Mention de la délivrance du brevet :
**17.06.92 Bulletin 92/25**

(84) Etats contractants désignés :
**DE ES FR GB IT**

(56) Documents cités :
**EP-A- 0 254 200**
**US-A- 3 680 966**
**US-A- 4 687 328**
**MICROTECNIC, no. 4, 1976, page 30, Zurich,**
**CH:** "**Rolls-Royce reduce inspection time from**
**3 hours to 10 minutes**"

(73) Titulaire : **SOCIETE NATIONALE D'ETUDE ET**
**DE CONSTRUCTION DE MOTEURS**
**D'AVIATION,** "**S.N.E.C.M.A.**"
**2, Boulevard du Général Martial Valin**
**F-75015 Paris (FR)**

(72) Inventeur : **Carbon, Vincent Alain**
**91 Rue Lemercier**
**F-75017 Paris (FR)**
Inventeur : **Meiffren, Jean-Luc Charles**
**25 rue J.B. Carpeaux**
**F-91240 St. Germain Les Corbeil (FR)**
Inventeur : **Pailliotet, Pierre Marie**
**13 Allée Paillard**
**F-91390 Morsang S/Orge (FR)**

(74) Mandataire : **Moinat, François et al**
**S.N.E.C.M.A. Service des Brevets Boîte**
**Postale 81**
**F-91003 Evry Cédex (FR)**

## Description

L'invention concerne un procédé de contrôle optique de microperçages réalisés dans des aubes creuses de turbines aéronautiques.

Dans ces types de pièces, il est important de pouvoir contrôler, voire mesurer la "perméabilité" des orifices percés à de très faible diamètre. Cette perméabilité est la capacité des perçages à laisser passer un débit d'air de ventilation ou de refroidissement au travers de la paroi dans laquelle ils sont percés et le respect d'une perméabilité minimale est la plupart du temps vital pour la durée de vie de la pièce en cause.

Il est déja connu, en particulier par le procédé ROLLS ROYCE décrit dans la revue MICROTECNIC N° 4 de 1976, d'effectuer le contrôle des percages d'un élément de chambre de combustion en plaçant ledit élément sur une table tournante de manière à ce que la zone comportant les perçages vienne intercepter un faisceau de lumière entre une source de lumière et un dispositif photosensible.

Ce dispositif qui convient aux pièces simples de révolution ne peut être utilisé pour des pièces complexes.

Ainsi, des aubes refroidies du premier étgage de turbine d'un turboréacteur supersonique, qui sont alimentées en air sous pression au travers d'une cavité pratiquée dans leurs pieds, possèdent dans un exemple une rangée de 53 perçages le long du bord d'attaque et deux rangées de 80 et 19 perçages le long du bord de fuite, tous ces perçages ayant un diamètre moyen de 300 à 500 microns.

La méthode actuelle de contrôle de la qualité de perçage de ces trous consiste à effectuer deux opérations manuellement :

– Dans chaque trou on fait passer une pige calibrée dont le rôle est de vérifier que le trou est à un diamètre minimal égal à celui de la pige et qu'il débouche  intérieurement dans la cavité de l'aube ;

– ensuite, on compte chaque trou pour vérifier que le nombre de trous prévu a été réalisé.

Outre le fait que cette méthode est longue et fastidieuse, les risques d'erreur sont grands dans le comptage des trous, comme dans la vérification du perçage par piges calibrées, certains trous pouvant être oubliés lorsque l'attention de l'opérateur faiblit.

D'autre part ces opérations ne permettent pas de vérifier si les trous ont été percés au bon endroit ni si la qualité du perçage (faux rond, etc...) est correcte.

Aussi c'est le but de la présente invention que de mettre au point une méthode optique de contrôle des perçages d'aubes creuses de turbomachines qui évite tous les inconvénients ci-dessus exposés et qui permette d'assurer un contrôle rapide de la qualité des perçages, de leur nombre et de la bonne localisation de leur réalisation et ceci avec des interventions humaines les plus limitées possibles.

Un but connexe de la présente invention est de réaliser un dispositif pratique de mise en oeuvre de la méthode de contrôle qui permette de réaliser soit un contrôle pièce par pièce soit un contrôle simultané de plusieurs pièces.

L'invention a donc pour objet un procédé optique de contrôle des perçages d'une aube creuse de turbomachine, notamment des perçages réalisés au voisinage du bord d'attaque ou du bord de fuite de la pale de l'aube.

Selon l'invention

– on éclaire, au moyen d'une source lumineuse la cavité interne de l'aube au travers du canal pratiqué dans le pied d'aube ;

– on balaye la longueur de la pièce au moyen d'une caméra vidéo et on enregistre la luminance des rayons réfléchis ayant traversé les orifices de la pièce à contrôler ;

– on transforme la suite des informations ainsi recueillies en signaux électriques ;

– on mémorise lesdits signaux dans une unité de calcul et de mémorisation ;

– on traite lesdits signaux et on les compare à un train de signaux de référence prédéterminé à partir d'une pièce étalon.

– l'analyse des signaux comporte une binarisation desdits signaux et, la surface vue par la caméra étant divisée en pixels de dimensions connues,

– on traite section par section la courbe d'intensité I de niveau de gris $I = f(d)$ où $d$ est la coordonnée selon l'axe de section,

– on effectue un traitement d'érosion-dilatation par addition d'une fonction en créneau $g(d)$, $g$ prenant les valeurs 0 ou 1 en fonction de la longueur $d$;

– on effectue un lissage sur $p$ points de la courbe $I'$ ainsi obtenue par $I' = f(d) + g(d)$, la valeur lissée $(I'(d_i) + I(d_{i+1}) + ... + I(d_{i+p})) / p$ étant réaffectée au point d'indice médian entre $i$ et $i+p$ pour obtenir une courbe lissée d'intensité $I''(d)$.

Le traitement des signaux de mesure peut comporter selon un mode de réalisation une analyse visuelle de la pièce sur écran vidéo avec ou sans comparaison sur l'écran avec une pièce de référence.

Le traitement peut également comporter une étape d'analyse de l'intensité de luminance point par point de l'image captée par la caméra.

D'autres caractéristiques du procédé de contrôle seront explicitées en regard des planches annexées parmi lesquelles :

– la figure 1 montre le schéma de principe dispositif de contrôle adapté au contrôle d'une aube ;

– la figure 2 montre le schéma de principe d'une variante du dispositif adaptée au contrôle simultané de plusieurs aubes.

– la figure 3 est un schéma d'une seconde variante adaptée au contrôle simultané ;

– la figure 4 montre une photo d'un exemple d'aube de modèle X refroidie dont le bord d'attaque comporte une rangée de 53 trous et dont le bord de fuite comporte deux rangées de 80 et 19 d'orifices d'écoulement d'air ;

– la figure 5 est une photo de l'image optique du bord de fuite de l'aube représentée à la figure 4, obtenue au moyen du procédé selon l'invention ;

– la figure 6 montre la photo d'une aube de modèle Y qui comporte sur son bord d'attaque trois rangées de 15 orifices d'évacuation d'air ;

– la figure 7 montre une image numérisée du bord d'attaque vu du côté extrados, de l'aube Y ainsi que l'exploitation des courbes de luminance pour l'interprétation des résultats lus sur l'image numérisée ;

– la figure 8 montre la courbe de luminance correspondant à la section AA de la figure 7 ;

– la figure 9 montre le défaut de perçage de la section AA de l'aube de la photo de la figure 7, telle que l'analyse l'a révélé.

– la figure 10a est une photo de l'aube modèle X montrant les microperçages du bord de fuite ;

– la figure 10b est une photo de la même aube montrant la rangée de microperçages du bord d'attaque ;

– les figures 11a à 11d sont les images reconstituées par numérisation et seuillage des signaux lumineux, des orifices du bord de fuite de l'aube de la figure 10a, la figure 11a étant la partie droite de la figure 10a et en allant jusqu'à sa partie gauche vers le pied d'aube (figure 11d) ;

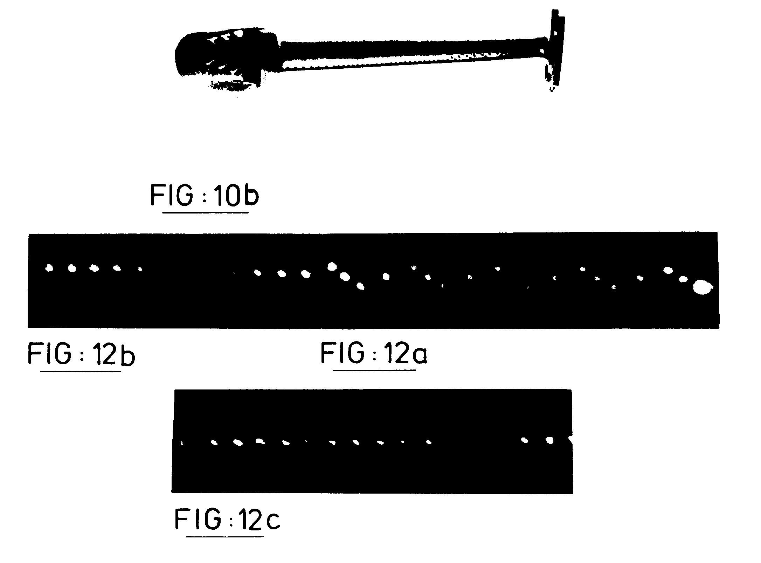

– de même les figures 12a à 12c sont des images similaires du bord d'attaque vue à la figure 10b, la figure 12a étant la partie opposée au talon et la figure 12c la partie voisine du talon.

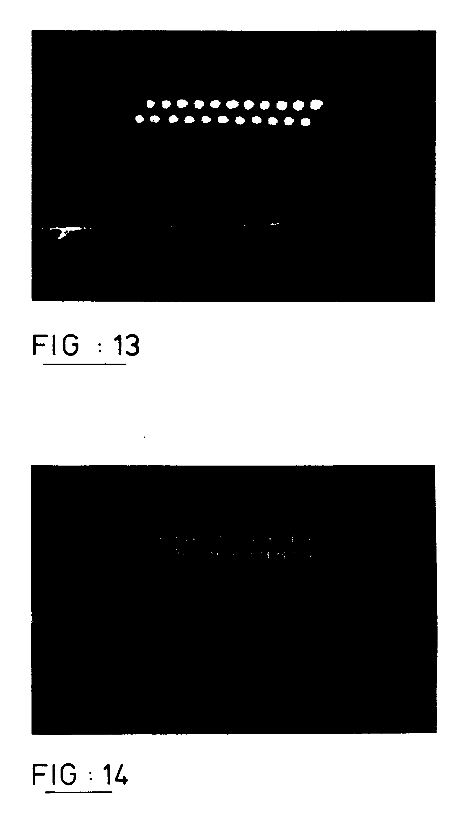

– la figure 13 est une image reconstituée du bord de fuite d'une aube modèle Z possédant deux rangées de 11 microperçages ;

– la figure 14 est une photo de l'image précédente traitée selon l'invention pour extraire les contours de chaque microperçage.

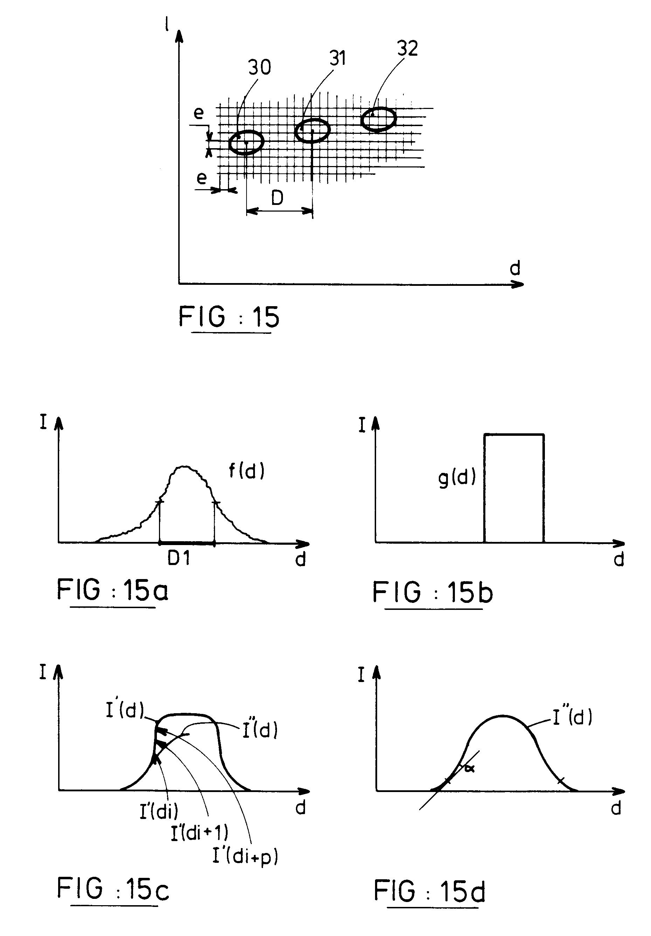

– les figures 15, 15a à 15d montrent diverses étapes d'une méthode fine de calcul du squelette d'images des microperçages.

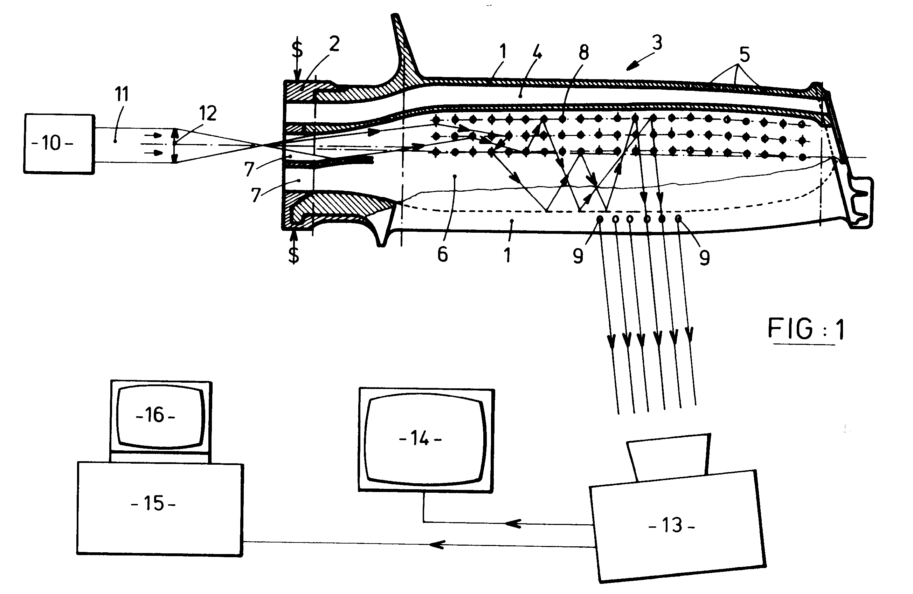

A la figure 1, on a représenté en coupe une aube creuse 1 d'un modèle X, refroidie par air et comportant un pied 2 et une pale creuse 3. Dans l'exemple ici montré, l'aube comporte un canal amont 4 au voisinage de son bord d'attaque, dont l'alimentation en air froid s'effectue par le pied 2 tandis que l'air est évacué par 53 microperçages 5 réalisés sur l'extrados au voisinage du bord d'attaque.

L'aube comporte également une cavité aval 6 alimentée par deux canaux 7 du pied d'aube 2 et comportant intérieurement des picots ou pontets 8 de turbulence. L'air est évacué vers le bord de fuite par deux rangées de microperçages 9 d'environ 500 microns de diamètre, chaque rangée comportant respectivement 80 et 19 perçages.

Le principe général de l'invention consiste à éclairer de l'intérieur une telle aube creuse et à regarder et analyser le rayonnement lumineux qui traverse la paroi de l'aube par les orifices 3 ou 9 dont le nombre et les caractéristiques doivent être mesurés.

Pour permettre la mise en oeuvre de ce principe on éclaire l'aube au moyen d'une source de lumière cohérente, ici un tube laser 10 du type à argon ionisé, d'une puissance de 1 Watt, à émission en continu qui produit un faisceau lumineux d'une longueur d'ondes de 514,4 nanomètres.

L'énergie lumineuse Es disponible en sortie des microperçages est égale à $Es = \rho^x Ee$ où x est le nombre de réflexions du rayonnement à l'intérieur de la cavité.

Cette énergie étant reçue par une caméra vidéo 13, il faut que Es soit compatible avec les niveaux d'énergie décelables par de telles caméras, i.e., de quelques milliwatts pour une caméra à bas niveau de luminance type CCTV.

L'image reçue par la caméra 13 est envoyée à un moniteur vidéo 14 sur lequel elle peut être interprétée par un opérateur.

Le faisceau 11 est focalisé au moyen d'une lentille convergente 12 et son axe optique est orienté sensiblement dans l'axe de symétrie de la cavité à éclairer, ici la cavité aval 6. En fonction de la structure interne de l'aube étudiée, on positionne ladite aube par rapport à la source laser 10 de façon à privilégier une répartition lumineuse homogène dans la cavité de l'aube.

D'autre part, le faisceau lumineux focalisé rencontre sur son trajet un certain nombre d'obstacles (parois des canaux 7, pontets 8, paroi interne de la cavité 6) sur lesquels il se réfléchit, avant de sortir par les microperçages 5 ou 9, et il est important de limiter le nombre de réflexions des rayons lumineux dans la cavité car à chaque réflexion l'intensité de lumière réfléchie Ir est égale à Ir = ρ le
où

– le est l'intensité de lumière incidente

– ρ est le rendement global lié au coefficient de réflectivité du matériau. Pour chaque réflexion on a :

$$\rho = \frac{(n_{air} - n_{métal})^2 + k^2}{(n_{air} + n_{métal})^2 + k^2}$$

avec $n_{air}$ et $n_{métal}$ pour indices de réfraction dans l'air et dans le métal et k pour coefficient d'absorption du métal.

Dans le cas des matériaux utilisés pour la fabrication d'aube creuse, les indices de réfractions "$n_{métal}$" desdits métaux varient de 0,58 à 0,63 et le coefficient d'absorption est nul.

Ainsi pour une aube du modèle X précité, réalisée en un alliage base nickel du type INCONEL 718 (nom commercial) comprenant 19% Cr, 18% Fe, 5% Nb, reste Ni, le rendement ρ est égal à 0,057 pour une réflexion.

Pour un autre alliage utilisé pour des aubes de modèle Y dont il sera question plus loin, ledit alliage base nickel appelé DS 200 (nom commercial) comportant 12% W, 10%Co, 9% Cr, 5% Al, reste Ni, le rendement ρ est égal à 0,076. Parallèlement, les signaux issus de la caméra 13 sont envoyés sur un calculateur analogique digital où ils sont numérisés pour être traités dans un module de traitement d'image 15.

Par traitement de convolutions et filtrage, on améliore la sensibilité de détection et on augmente le contraste entre les perforations ultérieures et le reste de la pièce. On recrée ainsi des images corrigées que l'on peut visualiser sur l'écran 16 lié au module de traitement 15. Par ailleurs, l'image étant mémorisée, on peut pour chaque balayage de l'image établir la courbe de luminance afférant à la section correspondante de la pièce. L'intensité lumineuse reçue point par point et numérisée est fonction du diamètre du microperçage par lequel le rayon lumineux correspondant est sorti. Ainsi on peut faire une analyse plus fine de l'état exact de la pièce.

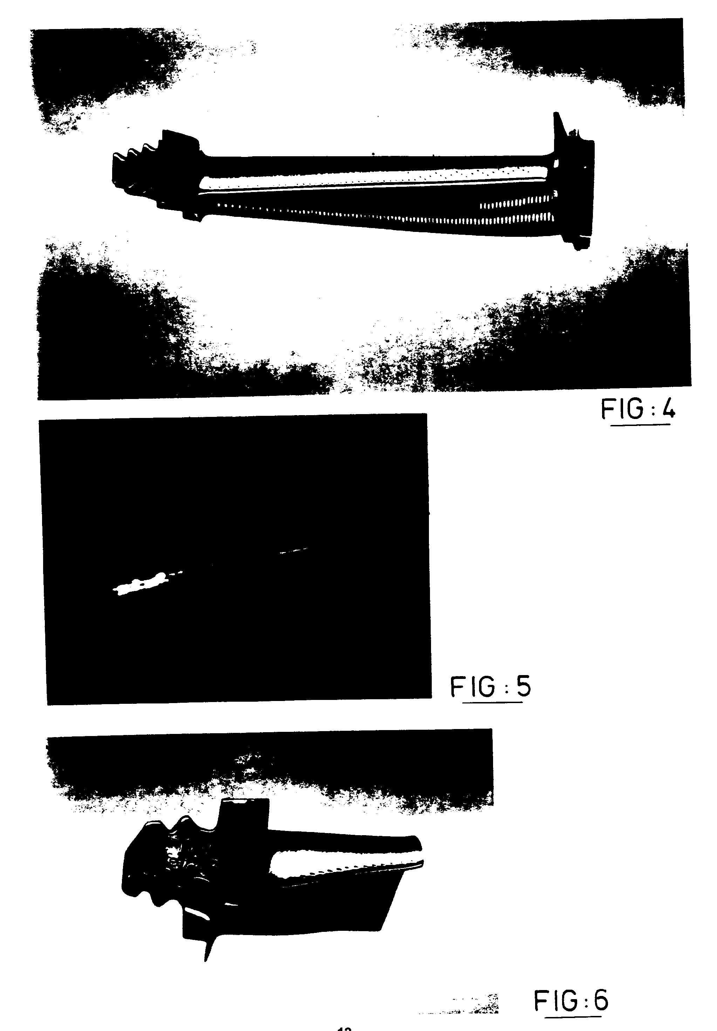

Des exemples de mise en oeuvre vont maintenant être explicités en regard des figures 4 à 7.

Deux types d'aubes creuses ont été contrôlés au moyen du dispositif selon l'invention.

Les deux types d'aubes étaient des aubes de turbine haute pression de turbomachine, la première, modèle X, en INCONEL 718 et la seconde, modèle Y en DS 200. Le nombre des microperçages existant est résumé sur le tableau suivant :

| PIECES | Microperçages existants | | Microperçages détectés | | | |
| | | | Image vidéo | | Image numérique corrigée | |
| | BA | BF | BA | BF | BA | BF |
| Aube HP Modèle X | 53 | 80 +19 | 53 | 80 +19 | | |
| Aube HP Modèle Y | 15 +15int. +15ext. | 14 | 14 +15 +15 | 14 | 15 15 15 | 14 |

La figure 4 est une photo de l'aube du modèle X dont on voit les perçages du bord de fuite.

La figure 5 est la photo de la signature optique des perçages du bord de fuite telle que visible sur l'écran vidéo 14. On constate que la totalité des perçages est restituée sur la photo de la figure 5. Les deux rangées de perçages sont visibles et le nombre de perçages de chacune des rangées peut être compté.

Les perçages apparaissant plus sombres que d'autres doivent être interprétés comme ayant un diamètre plus faible ou comme partiellement débouchant.

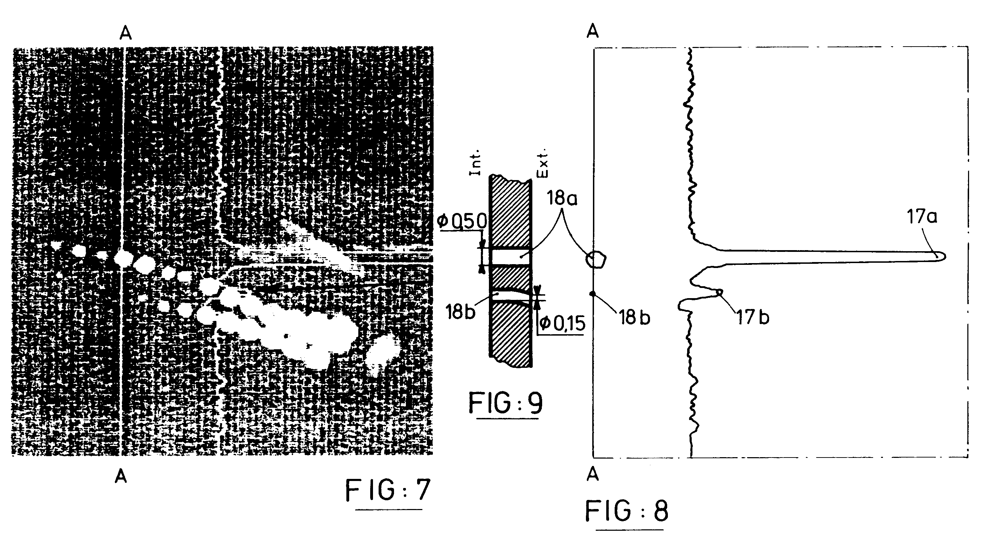

La figure 6 est la photo du bord d'attaque de l'aube du modèle Y. Sur la photo figure 7, l'image traitée et reconstituée numériquement montre deux des trois rangées de 25 perçages existants. L'orientation de la troisième rangée de perçages ne la rend pas visible sur la photo.

Alors que l'image vidéo (similaire à celle de la figure 5 n'avait permis de dénombrer sur une des deux rangées, que 14 orifices au lieu des 15 existants, l'image reconstituée de la figure 7 permet, par l'amélioration du contraste de détecter les 15 perforations prévues.

Le 15ème trou, non visible sur l'image vidéo, correspond à la section AA de la figure 7.

L'exploitation de la courbe de luminance de cette section, de la pièce contenant la majorité des perçages à contrôler (choisie dans un plan de coupe sensiblement perpendiculaire à la direction qui a été redessinée à la figure 8) montre deux pics d'intensité. Le premier pic 17a, de forte hauteur, correspond à un orifice de diamètre normal 18a. Le second pic 17b, de plus faible hauteur révèle l'existence d'un orifice 18b que l'image vidéo ne révélait pas. Une analyse plus fine de l'orifice 18b a montré que ce dernier débouchait obliquement et que le diamètre "visible" par la caméra était de 0,15 mm au lieu des 0,50 prévus. Un tel défaut dans la géométrie du perçage n'aurait pas été visible avec la méthode antérieure de contrôle par piges.

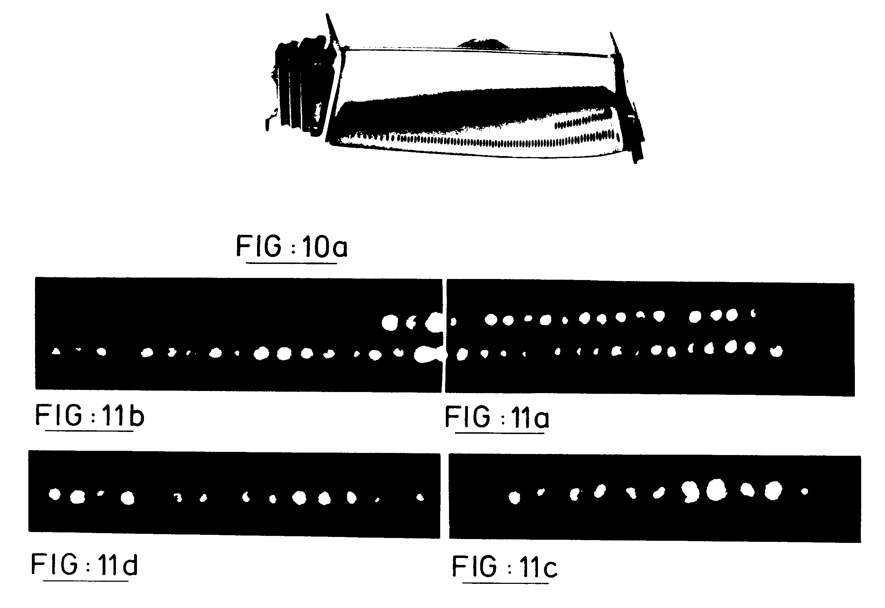

Par référence aux figures 10 à 15d on va mettre en évidence les traitements de numérisation et leurs résultats.

Après numérisation, chaque pic d'intensité lumineuse peut être comparé avec un seuil de binarisation prédéterminé, ce qui permet une analyse qualitative et quantitative de comptage des microperçages débouchants.

Les figures 11a à 11d sont les images numérisées du bord de fuite photographié à la figure 10a. Sur la figure 11a, on peut constater qu'entre le 4è et le 5è trous visibles de la rangée du haut à partir de la droite, un intervalle noir plus long que les autres montre un trou non débouchant sur la rangée du bas, le 5è trou à partir de la droite est faiblement débouchant. Cette analyse qualitative peut être quantifiée et les paramètres géométriques des microperçages peuvent être déterminés.

Ainsi, si l'on se réfère à la figure 15 qui représente une portion de l'écran de visualisation du module de traitement d'images 15, l'écran est séparé en pixels de dimension "e". Le balayage par ligne permet d'attribuer à chaque pixel le niveau binarisé d'intensité lumineuse correspondant à un perçage ou à une partie non percée de la surface. Par comptage des pixels consécutifs éclairés, on peut connaître la surface de chaque microperçage et on peut déterminer le centre de gravité de chaque microperçage que l'on assimile au centre géométrique du perçage.

Ayant déterminé le centre de gravité de chaque microperçage, on peut en déduire la distance séparant les centres de gravité consécutifs et donc la distance des trous.

On peut également à partir de cette mesure calculer la droite des moindres carrés pour chaque génératrice de microperçages et déterminer la dispersion de chaque perçage par rapport à cette droite des moindres carrés.

Une seconde méthode de traitement permet d'affiner les paramètres dont il vient d'être question.

Pour chaque microperçage, on peut calculer, pixel par pixel, la valeur moyenne du niveau de gris de chaque pixel d'un perçage, c'est-à-dire la valeur $I_d$ de l'intensité au niveau du pixel d'abscisse d rapportée à la surface $e^2$ dudit pixel, ce qui permet de réaliser un "grossissement apparent" de chaque perçage.

Par cette méthode, on peut optimiser la mesure du rayon de chaque perçage et éliminer de l'image numérisée des points aberrants, introduits dans la chaîne de mesure soit par le système optique soit par le système d'image, ceci en supprimant de l'image reconstituée les points dont le rayon traité calculé sur la valeur moyenne des niveaux de gris serait inférieur à une valeur minimale imposée.

De même, en utilisant lesdites "valeurs moyennes de niveaux de gris", on peut recalculer toutes les données précédentes (distance interperçages, dispersion des trous, leurs surfaces) de façon plus fine.

Si l'on désire faire une exploitation quantitative sur une image globale d'une rangée de perçages, on pourra effectuer une extraction de contour de chaque perçage, c'est-à-dire former un "squelette d'image".

La figure 13 représente l'image binarisée d'une double rangée de perçages du bord de fuite d'une aube d'un modèle Z, telle qu'obtenue par les procédés ci-dessus décrits tandis que la figure 14 en est la représentation sous forme de "squelette d'image" obtenue de la façon suivante.

Comme on l'a vu aux figures 7 et 8, la courbe d'intensité lumineuse pour chaque balayage est perturbée par un facteur de bruit. Il en est de même pour les niveaux de gris calculés précédemment. La méthode d'extraction de contour a pour but de déterminer avec une extrême précision le bord de chaque microperçage.

Pour ce faire, à chaque balayage et pour chaque perçage déterminant un pic de niveau de gris on détermine la courbe d'intensité de niveau de gris I = f(d) (figure 15a). On ajoute à cette fonction une fonction en créneau g = g(d) (figure 15b) et on effectue un lissage sur p points de la courbe obtenue I′ = f(d) + g(d), la valeur lissée $\dfrac{I'(d_i) \ + \ I'(d_{i+1}) \ + \ ... \ + \ I'(d_{i+p})}{p}$ étant réaffectée au point d'indice médian, pour fournir une courbe I″ (d) érodée (suppression des pics intempestifs de buits), dilatée (par l'adjonction de la fonction g(d) et lissée, dont on extrait la valeur $\alpha$ du coefficient de tangente correspondant au point d'inflexion de la courbe lissée I″(d).

Cette opération étant faite à chaque balayage et pour chaque perçage, les valeurs ainsi déterminées et mémorisées permettent de reconstituer pour chaque perçage le contour précis de celui-ci.

La photo de la figure 14 est la reconstitution par cette méthode du contour de chaque perçage de la figure 13, chaque point de chaque contour ayant été déterminé par la méthode indiquée ci-dessus.

Tous les paramètres (surface des perçages, intervalles entre perçages, dispersion) peuvent ainsi être recalculés avec une extrême précision.

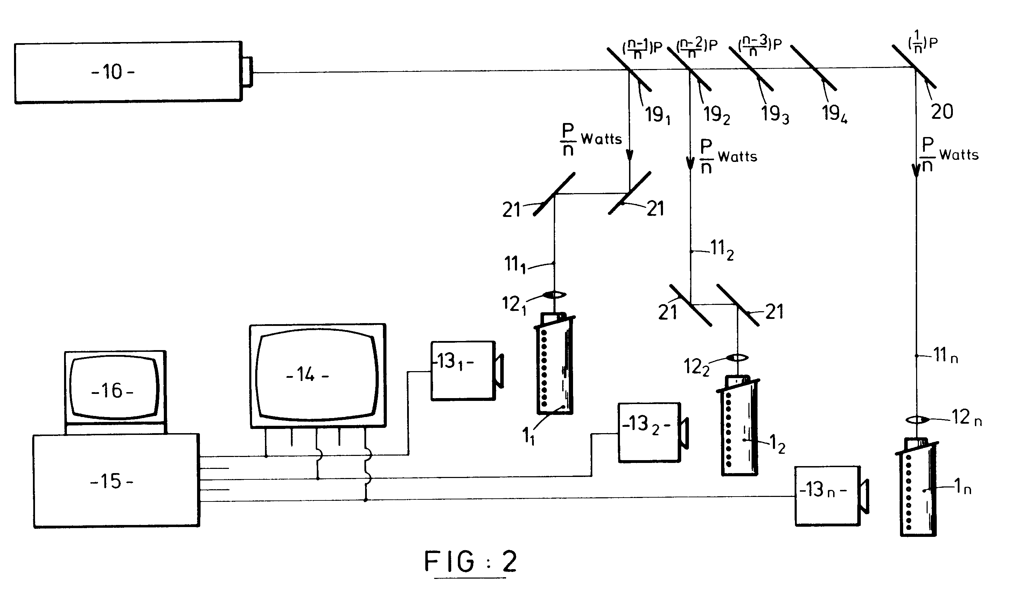

La méthode de contrôle selon l'invention vient d'être décrite en considérant un contrôle de pièce unitaire. Cette méthode peut toutefois être étendue au contrôle simultané de plusieurs pièces. Ainsi, si l'on regarde la figure 2, on a interposé, entre le laser 10 et n pièces à mesurer, (n-1) séparateurs à lame ou à prisme $19_i$ en série avec un miroir 20. Le premier séparateur $19_1$ réfléchit un rayon de puissance P/n et transmet au second séparateur $19_2$ une puissance $(\dfrac{n-1}{n})$. P Watts.

Il en est de même pour le second $19_2$ qui transmet $(\dfrac{n-2}{n})$. P Watts

et ainsi de suite jusqu'au miroir 20 qui reçoit et réfléchit la dernière fraction P/n de la puissance de la source 10.

Au moyen de miroirs 21, chaque faisceau laser $11_i$ est envoyé sur une pièce à contrôler $1_i$ avant laquelle il est focalisé par une lentille $12_i$.

Pour chaque pièce le principe de réflexion des rayonnements est identique à celui vu plus haut, le dispositif comporte n caméras $13_i$ en parallèle et le module de traitement d'image 15 comporte n mémoires parallèles et une unité de traitement permettant de reconstituer n images corrigées des pièces contrôlées.

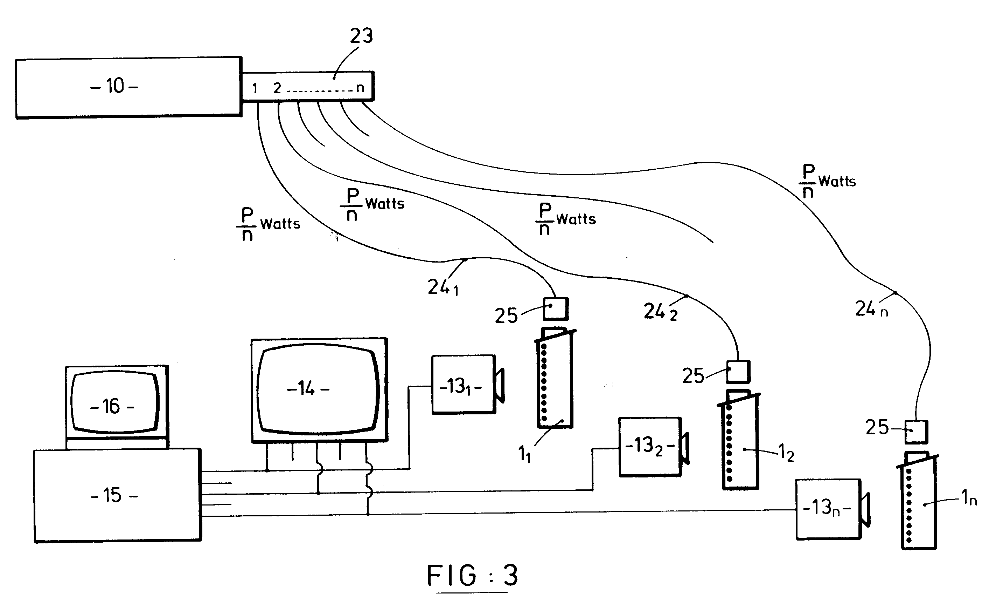

Dans la variante de la figure 3, les moyens de détection et de calcul sont identiques à ceux de la figure 2. La différence essentielle réside dans les moyens de transmission des faisceaux laser utilisés.

Le laser 10 de puissance P Watts émet un rayonnement sur un montage optique 23 de séparation dont les sorties sont constituées par n fibres optiques $24_i$ à l'extrémité desquelles sont disposés des moyens de focalisation 25 du faisceau, adaptés auxdites fibres optiques.

Le dispositif peut également être automatisé pour améliorer la cadence de contrôle en lui adjoignant un dispositif de préhension de pièces et un robot de mise en place des pièces devant chaque position de contrôle, et de retournement des pièces, pour celles dont les perçages du bord d'attaque et du bord de fuite doivent être vérifiés, ou selon une variante en laissant la pièce fixe et en utilisant un robot portant la caméra de recueil d'images.

En outre en permettant la comparaison des valeurs de la pièce contrôlée avec celles de référence d'une pièce étalon mémorisée dans l'unité de calcul, on peut pour chaque pièce donner un verdict de contrôle précisant la conformité du nombre des perçages, de leur diamètre et de leur écartement.

Ainsi, la méthode proposée améliore largement la qualité et la rapidité du contrôle et elle permet de contrôler des perçages dont le diamètre peut descendre jusqu'à 10 microns, valeur en dessous de laquelle le faisceau lumineux qui était parallèle à l'entrée du perçage à contrôler serait diffracté lors de son passage dans l'orifice, ce qui rendrait la méthode inapplicable.

## Revendications

1. Procédé optique de contrôle des percages (5,9) d'une aube creuse de turbomachine, notamment des percages réalisés au voisinage du bord d'attaque ou du bord de fuite de la pale de l'aube, suivant lequel,

– on éclaire, au moyen d'une source lumineuse (10) la cavité interne (4,6) de l'aube au travers du canal (7) pratiqué dans le pied d'aube ;

– on balaye la longueur de la pièce au moyen d'une caméra vidéo (13) et on enregistre la luminance des rayons réfléchis ayant traversé les orifices (5,9) de l'aube à contrôler,

– on transforme la suite des informations ainsi recueillies en signaux électriques,

– on mémorise lesdits signaux dans une unité de calcul (15) et de mémorisation,

– on analyse lesdits signaux et on les compare à un train de signaux de référence prédéterminé à partir d'une pièce étalon,

caractérisé en ce que,

l'analyse des signaux comporte une binarisation desdits signaux et, la surface vue par la caméra (13) étant divisée en pixels de dimensions connues,

– on traite section par section la courbe d'intensité I de niveau de gris I = f(d) où d est la coordonnée selon l'axe de section,

– on effectue un traitement d'érosion -dilatation par addition d'une fonction en créneau g(d),g prenant les valeurs 0 ou 1 en fonction de la longueur d ;

– on effectue un lissage sur p points de la courbe I' ainsi obtenue par I' = f(d) + g(d), la valeur lissée

$$\frac{I'(d_i) + I(d_{i+1}) + \dots I(d_{i+p})}{p}$$ étant réaffectée au point d'indice médian entre i et i+p pour obtenir une courbe lissée d'intensité I''(d).

2. Procédé selon la revendication 1 caractérisé en ce que lors de l'analyse de microperçages disposés théoriquement sur une génératrice, on calcule la droite des moindres carrés pour chaque génératrice, on compare les seuils d'intensité lumineuse traités avec ladite droite calculée pour déterminer l'alignement des microperçages et la dispersion desdits microperçages par rapport à la droite des moindres carrés.

3. Procédé selon la revendication 2 caractérisé en ce que on fait effectuer au rayon émis des réflexions intermédiaires entre les obstacles internes (8) de la cavité, tels que picots, pontets ou autres, et les bords internes de ladite cavité et en ce qu'on dispose la pièce (1) de telle sorte que le nombre desdites réflexions intermédiaires soit limité à une valeur x compatible avec l'énergie lumineuse Es détectable par la caméra vidéo (13) en sortie de la pièce (1), ladite énergie Es étant liée à l'énergie du faisceau émis Ee par la relation Es = $\rho^x$ Ee, où $\rho$ est le rendement global de transmission fonction du nombre total de réflexions et du coefficient de réflectivité du matériau de la pièce et où x est ledit nombre de réflexions intermédiaires.

## Patentansprüche

1. Optisches Verfahren zur Prüfung von Bohrungen (5, 9) in einer Hohlschaufel für Turbomaschinen, insbesondere zur Prüfung der Bohrungen, die in der Nähe der Vorderkante oder der Hinterkante des Schaufelblatts angebracht sind, bei dem man

– mit einer Lichtquelle (10) den inneren Hohlraum (4, 6) der Schaufel durch den in dem Schaufelfuß angebrachten Kanal (7) beleuchtet,

– mit einer Videokamera (13) das Werkstück über seine Länge abtastet und die Leuchtdichte der reflektierten Strahlen nach ihrem Durchtritt durch die Bohrungen (5, 9) der zu prüfenden Schaufel registriert,

– die Folge der so erhaltenen Informationen in elektrische Signale umwandelt,

– diese Signale in einer Rechner- und Speichereinheit (15) speichert, und

– die Signale analysiert und sie mit einer vorbestimmten, von einem Vergleichsstück gewonnenen Referenzsignalfolge vergleicht,

**dadurch gekennzeichnet,**

daß die Analyse der Signale eine Binärumwandlung umfaßt und die durch die Videokamera (13) gesehene Oberfläche in Pixel bekannter Abmessungen unterteilt ist,

– daß man Querschnitt für Querschnitt die Kurve I = f(d) der Intensität I des Grauwertpegels bearbeitet, wobei d die Koordinate in Richtung der Querschnittsachse bedeutet,

– daß man durch Überlagerung einer Rechteckfunktion g(d), in der g in Abhängigkeit von der Länge d die Werte 0 oder 1 annimmt, eine Abtragungs-Erweiterungs-Bearbeitung vornimmt und

– daß man die so durch die Operation I' = f(g) + g(d) gewonnene Kurve I' einer Glättung über p Punkte unterzieht, wobei der geglättete Wert [I'($d_i$) + I'($d_{i+1}$) + ... I'($d_{i+p}$)]/p dem mittleren Indexpunkt zwischen i und i+p neu zugeordnet wird, um eine geglättete Intensitätskurve I''(d) zu gewinnen.

2. Verfahren nach Anspruch 1, dadurch gekennzeichnet, daß man bei der Analyse von Mikrobohrungen, die theoretisch auf einer Mantellinie angeordnet sind, für jede Mantellinie die Gerade der kleinsten Fehlerquadrate berechnet und daß man die mit der berechneten Gerade behandelten Schwellwerte der Lichtintensität vergleicht, um die Fluchtung der Mikrobohrungen und ihre Streuung relativ zu der Geraden der kleinsten Fehlerquadrate zu bestimmen.

3. Verfahren nach Anspruch 2, dadurch gekennzeichnet, daß man den ausgesendeten Strahl Zwischenreflektionen zwischen den inneren Hindernissen (8) des Hohlraums, z.B. Gußspitzen, Brücken und dergleichen, und den inneren Rändern des Hohlraums durchlaufen läßt und daß man das Werkstück (1) so anordnet, daß die Zahl dieser Zwischenreflektionen auf einen Wert x begrenzt wird, der mit der von der Videokamera (13) erfaßbaren Lichtenergie Es vereinbar ist, wobei diese Energie Es mit der Energie Ee des ausgesendeten Strahlenbündels durch die Beziehung Es = $\rho^x$Ee verknüpft ist, in der p der globale Übertragungswirkungsgrad als Funktion der Gesamtzahl der Reflektionen und des Reflektionskoeffizienten des Materials des Werkstücks und x die Anzahl der Zwischenreflektionen bedeuten.

## Claims

1. Optical method of checking drillings (5, 9) of a hollow blade of a turbine engine, especially drillings produced in the vicinity of the leading edge or of the trailing edge of the vane of the blade, according to which,
   – the internal cavity (4, 6) of the blade is illuminated by means of a light source (10) through the channel (7) formed in the blade root;
   – the length of the piece is scanned by means of a video camera (13) and the luminance of the reflected rays is recorded when they have passed through the orifices (5, 9) of the blade to be checked,
   – the series of data thus received is transformed into electrical signals,
   – the said signals are stored in a calculation (15) and memory storage unit,
   – the said signals are analysed and they are compared to a train of reference signals which has been predetermined on the basis of a standard reference piece,
   characterised in that,
   the analysis of the signals comprises a binary conversion of the said signals and, the surface seen by the camera (13) being divided into pixels of known dimensions,
   – processing is carried out section by section on the intensity curve I of grey level I = f(d) where d is the co-ordinate along the sectional axis,
   – an erosion-dilatation processing is carried out by addition of a square-wave function g(d), g taking the values 0 or 1 as a function of the length d;
   – a smoothing is carried out over p points of the curve I′ thus obtained by I′ = f(d) + g(d), the smooth value $\dfrac{I'(d_i) + I(d_{i+1}) + \ldots I(d_{i+p})}{P}$ being reapplied to the median index point between i and i+p in order to obtain a smoothed intensity curve I″(d).

2. Method according to Claim 1 characterised in that during the analysis of the microdrillings arranged theoretically on a generatrix, the line of least squares is calculated for each generatrix, the processed thresholds of luminous intensity are compared with the said calculated line in order to determine the alignment of the microdrillings and the dispersion of the said microdrillings with respect to the line of least squares.

3. Method according to Claim 2 characterised in that the emitted beam is made to carry out intermediate reflections between the internal obstacles (8) of the cavity, such as spikes, bridging features or others, and the internal edges of the said cavity and in that the piece (1) is arranged in such a way that the number of the said intermediate reflections is limited to a value x which is compatible with the luminous energy Es detectable by the video camera (13) on coming out of the piece (1), the said energy Es being linked to the energy of the emitted beam Ee by the relation Es = $\rho^x$Ee where $\rho$ is the overall efficiency of transmission as a function of the total number of reflections and of the coefficient of reflectivity of the material of the piece and where x is the said number of intermediate reflections.

FIG : 1

FIG : 2

23

−10−

1 2 ............ n

$\frac{P}{n}$ Watts

$\frac{P}{n}$ Watts

$\frac{P}{n}$ Watts

$\frac{P}{n}$ Watts

$24_1$

$24_2$

$24_n$

25

25

25

−16−

−14−

−15−

$-13_1-$

$-13_2-$

$-13_n-$

$1_1$

$1_2$

$1_n$

FIG : 3

EP 0 359 660 B1

FIG : 4

FIG : 5

FIG : 6

FIG:8

17a

17b

18b

18a

Ext.

ø 0,15

FIG:9

ø 0,50

Int.

18b

FIG:7

A — A

FIG : 10a

FIG : 11a

FIG : 11b

FIG : 11c

FIG : 11d

FIG : 10b

FIG : 12b

FIG : 12a

FIG : 12c

FIG : 13

FIG : 14

FIG : 15

FIG : 15a

FIG : 15b

FIG : 15c

FIG : 15d